# EUROPEAN PATENT APPLICATION

(11) **EP 0 743 105 A1**
(43) Date of publication of application: **20.11.1996**
(21) Application number: 96201347.0
(22) Date of filing: 15.05.1996
(51) Int. Cl.: B08B 9/02, B08B 1/00, C02F 1/32

(54) **Device for cleaning the protective tubes of UV water sterilizers**

(30) Priority: 18.05.1995 NL 1000386
(71) Applicant: BERSON MILIEUTECHNIEK B.V., NL-5674 TL Nuenen (NL)
(72) Inventor: Berson, Johannes Jacobus, F-11200 Paraza (FR); Baas, Michael Maria, 5667 HX Geldrop (NL)
(74) Representative: Vollebregt, Cornelis Jacobus, Ir.

(57) **Abstract**

The invention relates to a method and a device for cleaning a protective tube (6), in which an ultraviolet light-emitting lamp used for treating fluid passed along said protective tube is disposed. During said cleaning a cleaning means (13) is moved along said protective tube. During the movement of the cleaning means along the protective tube a cleaning fluid is supplied to a chamber (7) surrounding the protective tube, which has been recessed in the cleaning means. The cleaning means can be moved along the protective tube by setting means and a motor, whilst a pipe (23,24) for the supply of cleaning fluid is connected to the chamber.

## Description

The invention relates to a method for cleaning a protective tube, in which an ultraviolet light-emitting lamp used for the sterilization, disinfection or the like of fluid passed along said protective tube is disposed, whereby a cleaning means is moved along said protective tube during said cleaning.

With the methods known so far deposits formed on the protective tube are mechanically removed during operation by the cleaning means being moved along the tube. In practice it has become apparent, however, that in many cases it is not possible thereby to achieve an effective removal of the deposits formed on the protective tube.

From DE-A-4,213,021 a similar method for mechanically cleaning a protective tube is known, wherein said cleaning is carried out by a cleaning means provided with a brush holder carrying brushes, which is supported by a carrier which is movable in the longitudinal direction of the protective tube. The brush holder is capable of rotation about the protective tube. The brush holder is connected to a blade wheel for driving the rotatable brush, whilst the carrier supports the end of a pipe, via which water under pressure can be supplied so as to rotate the blade wheel by means of a water jet which strikes on the blade wheel. The construction used is complicated and susceptible to malfunction and wear.

Further examples for the purely mechanical cleaning of protective tubes by means of brushes or scraping means can be derived from DE-A-3,710,250, GB-A-1,167,178 and EP-A-0,467,465.

According to the invention a cleaning fluid is supplied to a chamber surrounding the protective tube, which has been recessed in the cleaning means, during the movement of said cleaning means along the protective tube.

The mechanical cleaning effected by the cleaning means may be supported in an effective manner by the cleaning fluid by a suitable selection of the cleaning fluid, so that all undesirable deposits can be removed from the protective tube, thus obtaining an optimum utilization of the ultraviolet light. A comparatively small amount of cleaning fluid will be sufficient thereby.

An efficient device for carrying out said method is according to the invention characterized in that a cleaning means extending around a protective tube accommodated within said device and bounding a chamber is provided around said protective tube, said cleaning means being movable along said protective tube by setting means, whilst a pipe for the supply of cleaning fluid is connected to said chamber.

The invention may be used efficiently in a device provided with a housing, in which at least one ultraviolet light-emitting lamp is provided in a protective tube surrounding said lamp, and wherein an upstream part of said pipe and a downstream part of said pipe can be connected to opposite walls of said housing.

With the device known from the aforesaid German Offenlegungsschrift 3,710,250 the housing is made up of a tube whose diameter is considerably larger than the diameter of the upstream and downstream parts of the pipe, which parts are connected to the ends of partitions closing the tube. A single lamp extending in the longitudinal direction of the tube is disposed within said tube. The throughput capacity for fluid to be treated is small when such a device is used.

According to a further aspect of the invention the design and arrangement within the housing of a few ultraviolet light-emitting lamps surrounded by protective tubes is such that, seen in the longitudinal direction of the pipe to be connected to the device, said lamps are positioned at least substantially entirely within the inner circumference of said pipe and the openings formed in the walls of said housing for connecting said pipes.

When using the construction according to the invention the size of passage of the housing may be selected to be identical to or larger than the size of passage of the pipe, whilst at the same time an optimum use will be made of the lamps whose lengths are adapted to the size of passage of the pipe through which the fluid to be treated flows during operation.

The invention will be explained in more detail hereafter with reference to a few schematic figures, wherein some parts are shown on top of other parts in some of the Figures for easy reference.

Figure 1 is a perspective view of a housing of a device according to the invention, which housing may be accommodated within a pipe through which fluid to be purified flows.

Figure 2 schematically shows the housing with a few cleaning means provided therein and a mechanism for supplying cleaning fluid connected thereto.

Figure 3 is a view corresponding with Figure 2, showing the cleaning means and the parts connected thereto in a different position.

Figure 4 schematically shows the arrangement of four protective tubes with cleaning means surrounding said protective tubes, seen in the longitudinal direction of the protective tubes.

Figure 5 is a side view of Figure 4, partly in sectional view and partly in elevational view, wherein a few parts are shown in a position in which they are displaced in comparison with their position shown in Figure 4.

Figure 6 schematically shows another possible arrangement of the protective tubes with ultraviolet light-emitting lamps disposed within said tubes.

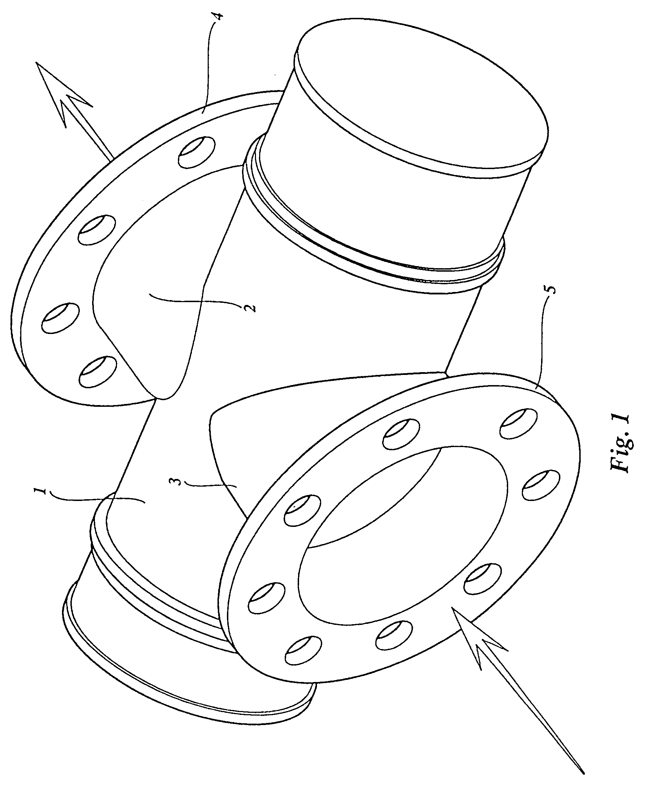

Figure 1 schematically shows a housing 1, in which one or more protective tubes for ultraviolet light-emitting tubes or lamps extending parallel to the longitudinal direction of the housing may be disposed, as will be explained in more detail hereafter, which tubes or lamps generally operate in the wavelength range of 50-300 Nanometer.

As is furthermore shown in Figure 1, two branch pieces 2 and 3 being in line are connected to said housing, in such a manner that the aligned central axes of branch pieces 2 and 3 extend perpendicularly to the central axis of housing 1. Secured to the free ends of said branch pieces are flanges 4 and 5 respectively, by means of which the device can be mounted in a pipe through which fluid flows which is be treated, for example for sterilization, disinfection, photo-oxidation or the like.

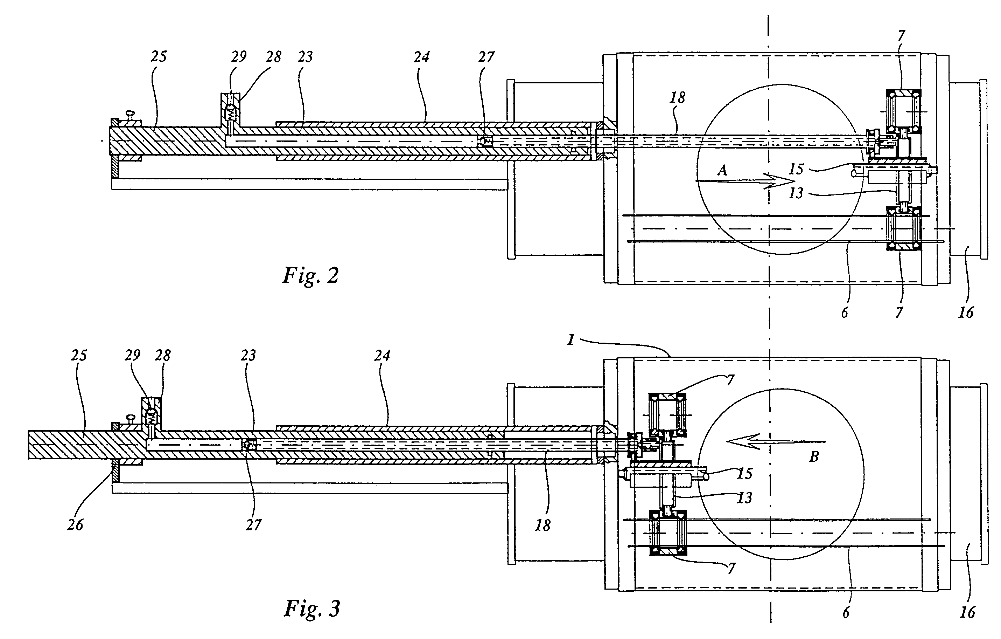

As is schematically shown in Figures 2 - 5, protective tubes 6 (four, for example) may be disposed within housing 1, in such a manner that, seen in the longitudinal direction of the housing 1 and of the protective tubes 6, said protective tubes are arranged at 90° angles relative to each other. Of course other arrangements of the tubes within the housing are conceivable within the spirit and scope of the invention.

Ultraviolet light-emitting tubes or lamps (not shown in Figures 2 - 5) for treating fluid flowing through the housing 1 during operation of the device are disposed within the protective tubes 6, which occupy a fixed position with respect to the housing 1.

Each of the protective tubes 6 is surrounded by a cleaning means 7. A cleaning means is provided with a sleeve-shaped housing 8, which extends at least substantially concentrically about the respective protective tube 6. Sealing rings 9 made of an elastic material, which tightly embrace the respective protective tube, are housed in grooves formed in the inner circumference of the sleeve-shaped housing 8, near the ends thereof. Said rings 9 bound a chamber 10, which has been recessed in the cleaning means 7 and which surrounds the respective protective tube 6.

A bore extending through the wall of sleeve-shaped housing 8 is formed in said sleeve-shaped housing, in which bore one end of a sleeve 11 is positioned. Said end of sleeve 11 is embraced by a sealing ring 12, which is housed in housing 8.

The end of sleeve 11 projecting from housing 8 is secured to an annular hollow coupling piece 13, which connects the various housings 8 to an internally threaded nut-shaped means 14, which is mounted on a screwed rod 15. Said screwed rod 15 can be rotated by means of an electromotor 16 mounted on housing 1, as a result of which the nut-shaped means 14 and the cleaning means 7 connected thereto can be reciprocated along the protective tubes 6, as is indicated by means of arrows A and B in Figures 2 and 3 respectively.

A branch piece 17 extending parallel to the protective tubes 6 is connected to said coupling piece 13, said branch piece being in open communication with the interior of coupling piece 13. Branch piece 17 is inserted into the end of a tube 18 extending parallel to the protective tubes, the part of said tube located near branch piece 17 extending through an opening 19, which is formed in an ear 20 secured to nut-shaped means 14. Stop means 21 and 22 respectively are attached to the tube 18 on either side of ear 20, said stop means limiting a lengthwise movement of tube 18 with respect to ear 20.

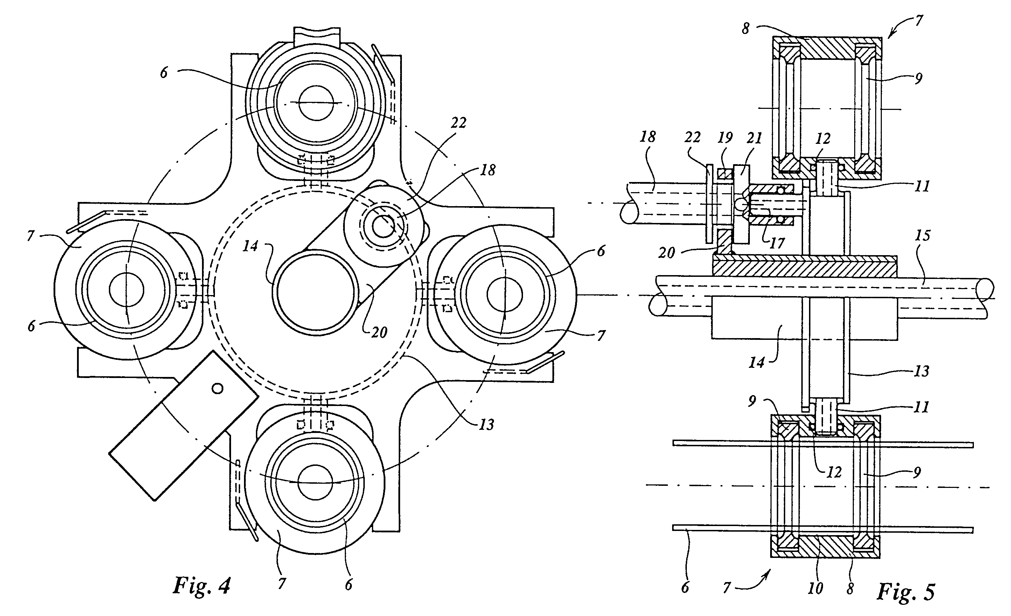

It is noted that the ear 20 shown in Figure 5 is illustrated in a position displaced over 45° relative to the actual position shown in Figure 4.

At its end remote from branch piece 17 tube 18 is accommodated within a further tube 23 in such manner as to be capable of telescoping movement therein, said tube 23 being movably supported by a sleeve 24 surrounding tube 23, which is secured to housing 1 (Figures 2, 3).

The closed end 25 of tube 23 facing away from tube 18 is furthermore movably supported by a support 26.

A non-return valve 27 is fitted in the end of tube 18 facing away from branch piece 17, and accommodated within tube 23, said non-return valve being designed such that fluid can flow from the interior of tube 23 into tube 18 via said valve 27, but that no fluid can flow from tube 18 into tube 23.

A branch piece 28 is connected to tube 23 near the closed end 25 of tube 23, in which branch piece a non-return valve 29 is fitted. Said non-return valve 29 is designed such that fluid can be introduced into tube 23 from the outside via said valve, but that no fluid can flow out of tube 23 via branch piece 28.

It will be apparent that when coupling piece 13 and the cleaning means 7 coupled thereto and tube 18 likewise coupled thereto are moved in the direction according to arrow A (Figure 2) by means of screwed rod 15, no supply of fluid via valve 29 will take place and a sub-atmospheric pressure will be generated in the interior of tube 23, so that said tube will also be moved to the right, seen in Figure 2, to the end position shown in Figure 2. When fluid is supplied via valve 29, fluid can flow into the interior of tube 23. When subsequently the direction of rotation of screwed rod 15 is reversed, so that coupling piece 13 and the cleaning means 7 and tube 18 coupled thereto are moved in the direction according to arrow B (Figure 3), non-return valve 29 will be closed and the fluid present in the interior of tube 23 will flow into the interior of tube 18 via non-return valve 27, and subsequently flow through branch piece 17 and the interior of coupling piece 13 and sleeves 11 into the chambers 10, which are recessed in cleaning means 7 and which surround the protective tubes. At the same time tube 23 is moved to the left-hand end position shown in Figure 3. As a result of the pressure being exerted on the fluid, said fluid can escape from the chambers by leaking through between the inner circumferences of rings 9 and the outer circumference of protective tube 6.

By selecting a suitable cleaning fluid, which for example has a pH-reducing effect, so that iron-containing constituents, which have precipitated on the outer circumferences of the tubes, for example, are dissolved in the cleaning fluid, the scraping cleaning action of the rings 9 will be supported in an effective manner in order to effect an efficient cleaning of the outer circumference of protective tubes 6.

When it is aimed at to prevent the cleaning fluid as much as possible from being mixed with the fluid being passed through the device, which fluid is to be irradiated with ultraviolet light, discharge pipes moving to and fro along with the cleaning means may be connected to chambers 10.

Although the protective tubes and the lamps disposed within said tubes are arranged in a circle at 90° angles relative to each other in the above-described embodiment, also other arrangements are conceivable.

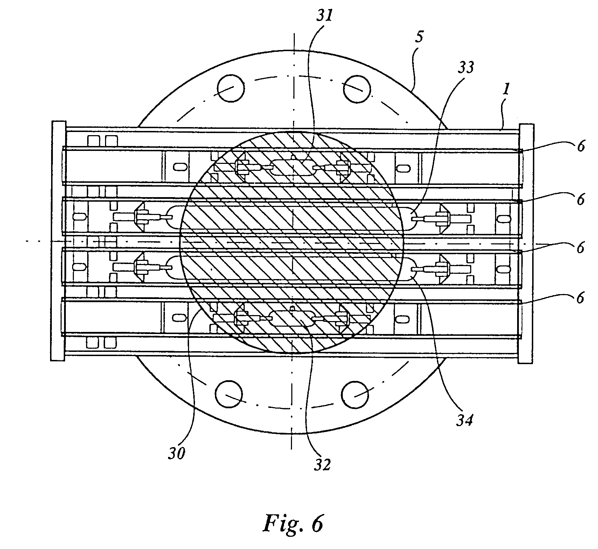

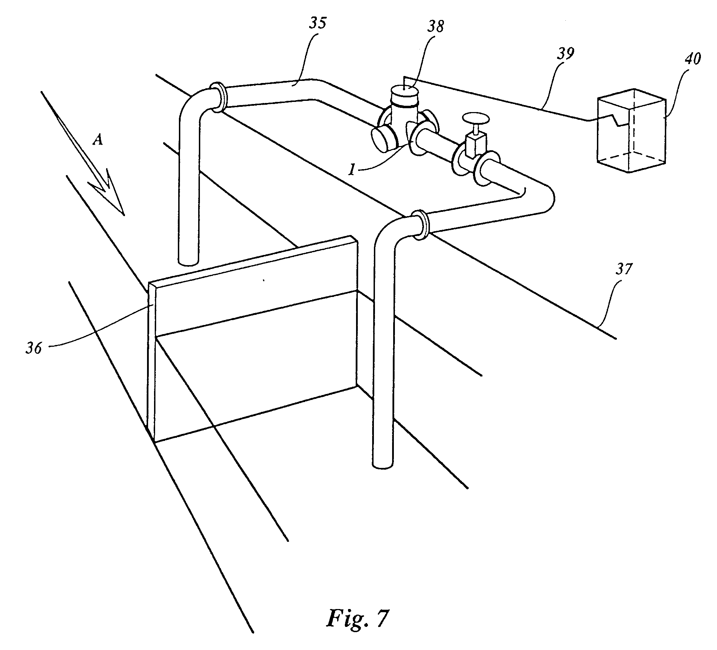

Thus Figure 6 shows an embodiment wherein the central axes of the protective tubes 6 are arranged in a single plane extending perpendicularly to the central axes of the branch pieces 2 and 3.

In Figure 6 the contour of the inner circumference of the pipe and of branch pieces 2 and 3 is indicated by means of circle 30. As will be apparent from Figure 6, the uppermost and lowermost lamps 31 and 32 positioned within the protective tubes are shorter than the two middle most lamps 33 and 34, all this in such a manner that said lamps 31 and 32 are positioned at least substantially entirely within the inner circumference 30 of the pipe. In this manner lamps are used whihch are only as large as is absolutely necessary, so that an optimum utilization of the lamps may be effected with a minimal power consumption.

It will be apparent that variations to the above-described constructions are possible within the spirit and scope of the invention.

Thus it will for example be possible to leave out sleeve 24 in the embodiment according to Figures 2 and 3, and to fix tube 23 to housing 1. In that case also support 26 may be left out, and non-return valve 29 may for example be fitted in the end of tube 23 facing away from housing 1, whereby a pipe for the supply of cleaning fluid may be connected to said end.

## Claims

1. A method for cleaning a protective tube, in which an ultraviolet light-emitting lamp used for the sterilization, disinfection and the like of fluid passed along said protective tube is disposed, whereby a cleaning means is moved along said protective tube during said cleaning, characterized in that a cleaning fluid is supplied to a chamber surrounding the protective tube, which has been recessed in the cleaning means, during the movement of said cleaning means along the protective tube.

2. A method according to claim 1, characterized in that a cleaning fluid having a pH-reducing effect is used.

3. A device for carrying out a method according to claim 1 or 2, characterized in that a cleaning means extending around a protective tube accommodated within said device and bounding a chamber is provided around said protective tube, said cleaning means being movable along said protective tube by setting means, whilst a pipe for the supply of cleaning fluid is connected to said chamber.

4. A device according to claim 3, characterized in that the pipe connected to said chamber within said cleaning means extends parallel to the longitudinal direction of a protective tube and is at its end facing away from the cleaning means fitted with a non-return valve, which prevents fluid from flowing out of said pipe.

5. A device according to claim 4, characterized in that the end of the pipe fitted with a non-return valve is accommodated within a space of a means which is provided with an supply pipe for cleaning fluid, which supply pipe is fitted with a non-return valve which prevents fluid from flowing out of said space.

6. A device according to claim 5, characterized in that said means comprising said space is freely movable in the longitudinal direction of the pipe over a some distance.

7. A device according to any one of the claims 3 - 6, characterized in that the chamber in the cleaning means is bounded by two sealing rings of a resilient material, which are housed in said cleaning means, which sealings rings tightly embrace the respective protective tube.

8. A device according to any one of the preceding claims, characterized in that said light source operates in the wavelength range of 50-300 Nanometer.

9. A device according to any one of the preceding claims, provided with a housing, in which at least one ultraviolet light-emitting lamp is provided in a protective tube surrounding said lamp, wherein an upstream part of said pipe and a downstream part of said pipe can be connected to opposite walls of said housing, characterized in that the design and arrangement within the housing of a few ultraviolet light-emitting lamps surrounded by protective tubes is such that, seen in the longitudinal direction of the pipe to be connected to the device, said lamps are positioned at least substantially entirely within the inner circumference of said pipe and the openings formed in the walls of said housing for connecting said pipes.

10. A device according to claim 9, whereby a round pipe may be connected to said device, characterized in that the lamps disposed nearer the central axis of the pipe, seen in the longitudinal direction of said pipe, have a greater length than the lamps disposed further away from the central axis of said pipe.
